# EUROPEAN PATENT SPECIFICATION

(11) **EP 1 832 191 B1**
(45) Date of publication and mention of the grant of the patent: **27.07.2011**
(21) Application number: 07103706.3
(22) Date of filing: 07.03.2007
(51) Int. Cl.: B29D 35/14, A43B 13/12, A43B 13/14

(54) **Sole unit for an article of footwear**
Sohleneinheit für Fußbekleidungsartikel
Unité de semelle pour chaussure

(30) Priority: 09.03.2006 GB 0604728
(43) Date of publication of application: 12.09.2007
(73) Proprietor: C & J CLARK INTERNATIONAL LIMITED, Street, Somerset BA16 OYA (GB)
(72) Inventor: Authers, Ross, Taunton, Somerset TA7 9JF (GB)
(74) Representative: Marles, Alan David

(56) References cited:
- WO-A-99/05928
- FR-A1- 2 633 810
- US-A- 6 115 945
- US-A1- 2003 140 523
- US-A1- 2005 076 536

## Description

The present invention relates to a sole unit for an article of footwear.

US 2003/0140523 discloses an outsole assembly comprising a footbed and an outsole, the footbed having a downwardly projecting plug which is tightly received in an opening provided in the heel area of the outsole.

US 2005/0076536 and US 6 115 945 disclose an article of footwear having an articulated sole structure in which a number of sipes are formed within the thickness of a sole element.

WO 99/05928 discloses a composite sole construction in which the outsole is formed with a number of openings through which the midsole is visible.

According to a first aspect of the present invention there is provided a sole unit for an article of footwear, the sole unit comprising an upper section and a lower section, the upper section being made from a resilient material having a lower hardness than the material from which the lower section is formed, the lower section not being co-extensive with the upper section such that parts of the upper section are visible through the lower section when the sole unit is viewed from below, wherein the lower section is provided with one or more sipes which extend through the thickness of the lower section and terminate at the upper section characterised in that two lengthwise extending sipes extend the full length of the sole unit from the toe end of the sole unit to the heel end of the sole unit, the space between the two sipes flaring outwardly towards the toe end.

Usually the lengthwise extending sipes are serpentine in shape so as to echo the shape of a foot and movement during walking. Optionally, a third lengthwise extending sipe extends between the two full length sipes from the toe end to the instep area.

In preferred arrangements one or more of the sipes extend in a generally lateral direction in the forward region of the sole unit to aid the flexing of the toe region during walking. Preferably, two lateral toe sipes extend obliquely from the outer lateral side to the inner lateral side and normally each lateral toe sipe meets the outer edge of the sole unit nearer the toe end than where it meets the inner edge of the sole unit.

A further preferred feature is that a third lateral toe sipe extends from the outer edge of the sole unit heelwards of the first two lateral sipes, the third sipe curving towards the inner edge of the sole unit in the instep region of the shoe and then back out to the outer edge of the sole unit.

Another preferred feature is that one or more of the sipes extend in a generally lateral direction in the heel region of the sole unit. Conveniently the lateral heel sipes are generally C-shaped and extend from the outer edge to the inner edge of the sole unit, the curve of the C being heelwards.

Usually an ovoid heel sipe is provided in the heel region, the ovoid heel sipe crossing the two full lengthwise sipes, having a junction with the third lengthwise sipe and crossing the two lateral heel sipes and the heelward end of the third lateral toe sipe.

It is a preferred feature that each sipe in cross-section has its opposite sides tapering inwardly towards the upper end of the sipe. Normally the material of the upper section is of a different colour to the material of the lower section and sometimes the material of the upper section is of a contrasting colour to the material of the lower section. Usually at least a portion of the lowermost surface of the lower section is provided with contours to aid grip.

Preferably, the Shore A hardness of the upper section is less than 55 and also the Shore A hardness of the lower section is 55 or more. Ideally the Shore A hardness of the upper section is greater than 35, preferably between 40 and 50, and preferably 45 and also the Shore A hardness of the lower section is between 55 and 75, preferably between 60 and 70 and preferably 65.

Usually the material of the lower section is resilient and in preferred embodiments the materials of upper and lower sections are vulcanised rubber.

According to a second aspect of the present invention there is provided an article of footwear comprising an upper and a sole, the sole incorporating a sole unit as discussed above. Ideally the entire sole area is constituted by such a sole unit as described although it is possible that the described sole unit could be provided just in the forward part of the sole or in the rear part of the sole. Optionally, a footbed is provided on top of the sole unit on the inside of the article of footwear.

Embodiments of the present invention will now be described in more detail. The description makes reference to the accompanying drawings in which:
Figure 1 is a side view from the inside of an article of footwear incorporating the present invention,

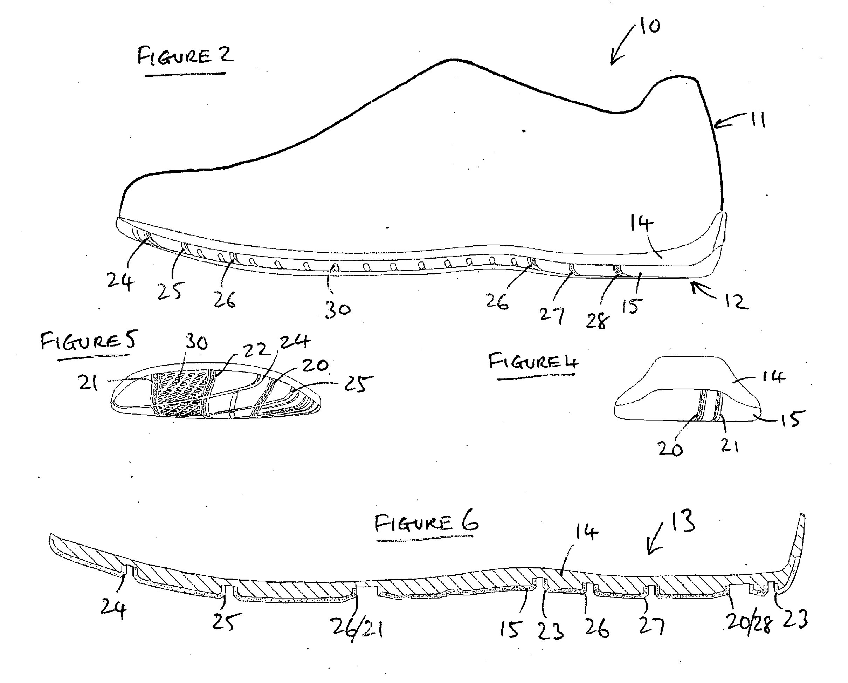

Figure 2 is a side view from the outside of the article of footwear as shown in figure 1,
Figure 3 is a view of the sole unit shown in figures 1 and 2 from underneath,
Figure 4 is a rear view of the sole unit,
Figure 5 is a front view of the sole unit, and
Figure 6 is a sectional view on line AA of figure 3.

The drawings show an article of footwear which in this embodiment is a shoe 10 but could also be a boot or a sandal or any other article of footwear. The shoe 10 has an upper 11 which is shown without detail for ease of reference and a sole 12. The sole 12 comprises a sole unit 13 which will be described in more detail below and which is co-extensive therewith in that the entire external sole area is constituted by the sole unit 13. It is possible for the sole unit to be provided only in certain regions of the sole, for example the forward part of the sole 12 or the rearward part of the sole 12.

The sole unit 13 is formed from an upper section 14 and a lower section 15 which in this embodiment are moulded together from two vulcanised rubber compounds, although other materials could be used. The material of the upper section 14 is flexible, resilient and has a Shore A hardness of 45 while the material of the lower section 15 is, in this embodiment, flexible and resilient and has a Shore A hardness of 65. In reality the value of hardness could vary but the lower section should be harder than the upper section. In practise, the lower section 15 is in contact with the ground and so a harder material is beneficial in terms of resistance to wear and damage whilst the upper section 14 is closer to the foot of the wearer and so the softer, more flexible material is beneficial in terms of comfort for the wearer.

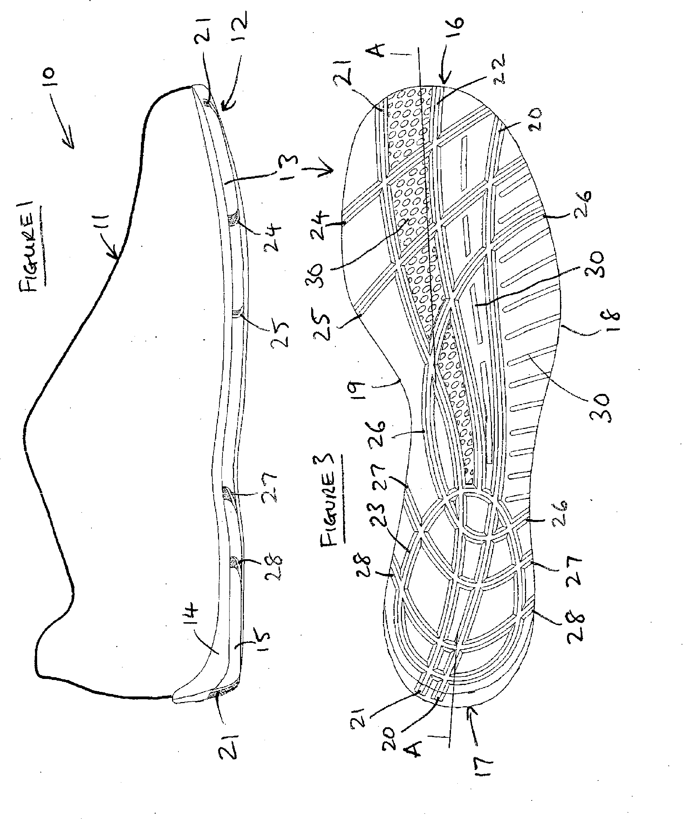

It will be seen from the drawings that the lower section 15 does not entirely cover the underside of the upper section 14. There are a number of sipes or grooves which extend through the entire thickness of the lower section 15 such that the upper section 14 is visible in the sipes when the sole unit 13 is viewed from below. Viewing figure 3 in particular, the sole unit 13 of this embodiment has a number of types of sipe, all of which are linked to provide a sole unit which has a great deal of flexibility in predetermined locations and directions as determined by the location of the sipes. The sole unit 13 effectively articulates about the sipes.

In the illustrated embodiment there are two lengthwise extending sipes 20, 21 which are generally serpentine in shape and extend from the toe end 16 to the heel end 17. At the heel end 17 the sipes 20, 21 are relatively closely spaced and they move further apart as they extend outwardly towards the outer edge 18 of the sole unit in the instep area and then begin to curve in the reverse direction towards the toe end 16. Between the two lengthwise extending sipes 20, 21 is a third lengthwise extending sipe 22 which extends from the toe end 16 to the instep area where it meets the fore end of an ovoid shaped sipe 23 provided in the heel area of the sole unit 13.

In the forward part of the sole unit 13 are two lateral sipes 24, 25 which extend somewhat obliquely from the outer edge 18 to a more heelward position at the inner edge 19 of the sole unit 13. These two lateral sipes 24, 25 intersect the three lengthwise extending sipes 20, 21, 22. There is also a third lateral sipe 26 in the forward part of the sole unit which extends from the outer edge 18 at a more heelward position than the first two lateral sipes 24, 25. The third lateral sipe 26 curves towards the inner edge 19 in the instep area and then curves back to the outer edge 19 after intersecting the ovoid sipe 23 and, within the ovoid sipe 23, the two fully lengthwise extending sipes 20, 21.

Also, there are two C-shaped lateral sipes 27, 28 in the heel area, both of which sipes 27, 28 pass through the ovoid sipe 23 rearwardly of the third lateral sipe 26 with the free ends of the C-shapes being forwardly disposed.

Some of the portions of the lower section 15 are provided with additional contours/patterns 30 to provide extra grip. The contours/patterns 30 which are shown can be at any location on the lower section 15 and can take any chosen form, not just those illustrated.

It will be appreciated from the figures that the upper section 14 is still visible through the sipes/grooves in the lower section 15. The upper and lower sections, 14, 15 are formed from materials having different properties, i.e. hardness. However, when the two materials are a different colour then the effect can be particularly eye-catching, especially if the two colours are contrasting. For example, a black lower section 15 coupled with a red upper section 14 can give particularly good results.

In addition, the sipes are intended to be provided at particular locations below the foot of the wearer so as to give good sole flexibility during the gait cycle of walking, running etc. The portions of the lower section 15 are able to articulate relative to each other, ideally so as to be able to follow the natural movements of the foot, and the shape of the foot itself. The design gives improved stability to the ground by virtue of the movement of the foot and sole unit in harmony. For example, the forward lateral sipes 24, 25 are in positions generally suitable for accommodating the flexing of the toe joints.

In use, the upper 11 of the article of footwear would be secured to the sole unit 13 and normally, but not necessarily, a footbed (not shown) would be inserted into the shoe so as to sit on the upper section 14. It is possible that the footbed could also be provided with sipes at corresponding locations to those in the lower section 15 so as to emphasise the ability of the foot to move properly during the gait cycle.

It will be appreciated that the precise materials of construction and the number/shape/location of the sipes are a matter of design choice and this is reflected in the wording of the attached claims.

## Claims

1. A sole unit (13) for an article of footwear (10), the sole unit comprising an upper section (14) and a lower section (15), the upper section being made from a resilient material having a lower hardness than the material from which the lower section is formed, the lower section not being co-extensive with the upper section such that parts of the upper section are visible through the lower section when the sole unit is viewed from below, wherein the lower section is provided with one or more sipes (20-28) which extend through the thickness of the lower section (15) and terminate at the upper section (14) **characterised in that** two lengthwise extending sipes (20,21) extend the full length of the sole unit from the toe end of the sole unit to the heel end (17) of the sole unit, the space between the two sipes flaring outwardly towards the toe end (16).

2. A sole unit as claimed in claim 1 wherein the lengthwise extending sipes (20, 21) are serpentine in shape so as to echo the shape of a foot and movement during walking.

3. A sole unit as claimed in claim 1 or claim 2 wherein a third lengthwise extending sipe (22) extends between the two full length sipes (20,21) from the toe end to the instep area.

4. A sole unit as claimed in any one of claims 1 to 3 wherein one or more of the sipes (24,25) extend in a generally lateral direction in the forward region of the sole unit (13) to aid the flexing of the toe region during walking.

5. A sole unit as claimed in claim 4 wherein two lateral toe sipes (24,25) extend obliquely from the outer lateral side (18) to the inner lateral side (19).

6. A sole unit as claimed in claim 5 wherein each lateral toe sipe (24,25) meets the outer edge of the sole unit nearer the toe end than where it meets the inner edge of the sole unit.

7. A sole unit as claimed in claim 6 wherein a third lateral toe sipe (26) extends from the outer edge of the sole unit heelwards of the first two lateral sipes (24,25), the third sipe curving towards the inner edge (19) of the sole unit in the instep region of the shoe and then back out to the outer edge of the sole unit.

8. A sole unit as claimed in any one of claims 1 to 7 wherein one or more of the sipes (27,28) extend in a generally lateral direction in the heel region of the sole unit.

9. A sole unit as claimed in claim 8 wherein the lateral heel sipes (27,28) are generally C-shaped and extend from the outer edge (18) to the inner edge (19) of the sole unit, the curve of the C being heelwards.

10. A sole unit as claimed in claim 3 in conjunction with claim 7 wherein an ovoid heel sipe (23) is provided in the heel region, the ovoid heel sipe crossing the two full lengthwise sipes (20,21), having a junction with the third lengthwise sipe (22) and crossing the two lateral heel sipes (27,28) and the heelward end of the third lateral toe sipe (26).

11. A sole unit as claimed in any one of claims 1 to 10 wherein each sipe in cross-section has its opposite sides tapering inwardly towards the upper end of the sipe.

12. A sole unit as claimed in any one of claims 1 to 11 wherein the material of the upper section (14) is of a different colour to the material of the lower section (15).

13. A sole unit as claimed in claim 12 wherein the material of the upper section (14) is of a contrasting colour to the material of the lower section (15).

14. A sole unit as claimed in any one of claims 1 to 13 wherein at least a portion of the lowermost surface of the lower section (15) is provided with contours to aid grip.

15. A sole unit as claimed in any one of claims 1 to 14 wherein the Shore A hardness of the upper section (14) is less than 55.

16. A sole unit as claimed in any one of claims 1 to 15 wherein the Shore A hardness of the lower section (15) is 55 or more.

17. A sole unit as claimed in claim 16 wherein the Shore A hardness of the upper section (14) is greater than 35, preferably between 40 and 50, and preferably 45.

18. A sole unit as claimed in claim 17 wherein the Shore A hardness of the lower section (15) is between 55 and 75, preferably between 60 and 70 and preferably 65.

19. A sole unit as claimed in any one of claims 1 to 18 wherein the material of the lower section (15) is resilient.

20. A sole unit as claimed in any one of claims 1 to 19 wherein the materials of upper and lower sections (14,15) are vulcanised rubber.

21. An article of footwear (10) comprising an upper (11) and a sole (12), the sole incorporating a sole unit (13) as claimed in any one of claims 1 to 20.

22. An article of footwear as claimed in claim 21 wherein the entire sole area is constituted by said sole unit (13).

23. An article of footwear as claimed in claim 22 wherein a footbed is provided inside the article of footwear on top of the sole unit.

## Patentansprüche

1. Sohleneinheit (13) für einen Fußbekleidungsartikel (10), wobei die Sohleneinheit eine obere Partie (14) und eine untere Partie (15) aufweist, wobei die obere Partie aus einem nachgiebigen Material gebildet ist mit einer geringeren Härte als das Material aus dem die untere Partie gebildet ist, wobei die untere Partie nicht deckungsgleich mit der oberen Partie ist, so dass Teile der oberen Partie durch die untere Partie hindurch sichtbar sind wenn die Sohle von unten betrachtet wird, wobei die untere Partie mit einer oder mehreren Rillen (20 bis 28) versehen ist, die sich über die Dicke der unteren Partie (15) erstrecken und in der oberen Partie (14) enden, **dadurch gekennzeichnet, dass** zwei sich in Längsrichtung erstreckende Rillen (20, 21) sich über die gesamte Länge der Sohleneinheit vom Zehenende der Sohleneinheit bis zum Fersenende (17) der Sohleneinheit erstrecken, wobei sich der Raum zwischen den zwei Rillen in Richtung des Zehenendes (16) nach außen verbreitert.

2. Sohleneinheit nach Anspruch 1, bei der die sich in Längsrichtung erstreckenden Rillen (20, 21) eine Serpentinenform aufweisen, um die Form eines Fußes und die Bewegung bei Gehen widerzuspiegeln.

3. Sohleneinheit nach Anspruch 1 oder 2, bei der sich eine dritte sich in Längsrichtung erstreckende Rille (22) zwischen den zwei Rillen (20, 21) gesamter Länge von dem Zehenende bis zum Spannbereich erstreckt.

4. Sohleneinheit nach einem der Ansprüche 1 bis 3, bei der eine oder mehrere der Rillen (24, 25) sich im Wesentlichen in Querrichtung im vorderen Bereich der Sohleneinheit (13) erstrecken, um die Flexibilität des Zehenbereichs beim Gehen zu unterstützen.

5. Sohleneinheit nach Anspruch 4, bei der sich zwei Querrillen (24, 25) im Zehenbereich schräg von der Außenseite (18) zur Innenseite (19) erstrecken.

6. Sohleneinheit nach Anspruch 5, bei der jede Querrille (24, 25) im Zehenbereich den äußeren Rand der Sohleneinheit näher am Zehenbereich trifft als wo sie den inneren Rand der Sohleneinheit trifft.

7. Sohleneinheit nach Anspruch 6, bei der sich eine dritte Querrille (26) im Zehenbereich von dem äußeren Rand der Sohleneinheit fersenseitig zu den zwei ersten zwei Querrillen (24, 25) erstreckt, wobei die dritte Rille in Richtung des inneren Rands (19) der Sohleneinheit im Bereich des Spanns des Schuhs gekrümmt verläuft und dann zurück zum äußeren Rand der Sohleneinheit.

8. Sohleneinheit nach einem der Ansprüche 1 bis 7, bei der eine oder mehrere der Rillen (27, 28) sich im Bereich der Ferse der Sohleneinheit im Wesentlichen in Querrichtung erstrecken.

9. Sohleneinheit nach Anspruch 8, bei der die quer verlaufenden Fersenrillen (27, 28) im Wesentlichen C-förmig ausgebildet sind und sich vom äußeren Rand (18) zum inneren Rand (19) der Sohleneinheit erstrecken, wobei die Kurve des C's zur Ferse weist.

10. Sohleneinheit nach Anspruch 3 in Verbindung mit Anspruch 7, bei der eine eiförmige Fersenrille (23) im Bereich der Ferse vorgesehen ist, wibei die eiförmige Fersenrille die zwei in Längsrichtung verlaufenden Rillen (20, 21) kreuzt, einen Treffpunkt mit der dritten in Längsrichtung verlaufenden Rille (22) aufweist und die zwei in Querrichtung verlaufenden Fersenrillen (27, 28) und das fersenseitige Ende der dritten in Querrichtung verlaufenden Rille (26) im Zehenbereich kreuzt.

11. Sohleneinheit nach einem der Ansprüche 1 bis 10, bei der im Querschnitt die gegenüberliegenden Seiten jeder Rille zum oberen Ende der Rille hin nach innen geneigt sind.

12. Sohleneinheit nach einem der Ansprüche 1 bis 11, bei der das Material der oberen Partie (14) eine andere Farbe aufweist als das Material der unteren Partie (15).

13. Sohleneinheit nach Anspruch 12, bei der das Material der oberen Partie (14) ein zum Material der unteren Partie (15) kontrastierende Farbe aufweist.

14. Sohleneinheit nach einem der Ansprüche 1 bis 13, bei der zumindest ein Teil der Unterseite der unteren Partie (15) mit Konturen zur Unterstützung der Griffigkeit versehen ist.

15. Sohleneinheit nach einem der Ansprüche 1 bis 14, bei der die Shore A Härte der oberen Partie (14) kleiner als 55 ist.

16. Sohleneinheit nach einem der Ansprüche 1 bis 15, bei der die Shore A Härte der unteren Partie (15) 55 oder mehr beträgt.

17. Sohleneinheit nach Anspruch 16, bei der die Shore A Härte der oberen Partie (14) größer als 35 ist, vorzugweise zwischen 40 und 50 liegt und bevorzugt 45 beträgt.

18. Sohleneinheit nach Anspruch 17, bei der die Shore A Härte der unteren Partie (15) zwischen 55 und 75 liegt, vorzugsweise zwischen 60 und 70, und bevorzugt 65 beträgt.

19. Sohleneinheit nach einem der Ansprüche 1 bis 18, bei der das Material der unteren Partie (15) nachgiebig ist.

20. Sohleneinheit nach einem der Ansprüche 1 bis 19, bei der die Materialien der oberen und unteren Partien (14, 15) vulkanisiertes Gummi sind.

21. Fußbekleidungsartikel (10) mit einem Oberteil (11) und einer Sohle (12), wobei die Sohle eine Sohleneinheit (13) nach einem der Ansprüche 1 bis 20 umfasst.

22. Fußbekleidungsartikel nach Anspruch 21, bei dem der gesamte Sohlenbereich durch die Sohleneinheit (13) gebildet ist.

23. Fußbekleidungsartikel nach Anspruch 22, bei dem ein Fußbett im Inneren des Fußbekleidungsartikels auf der Oberseite der Sohleneinheit vorgesehen ist.

## Revendications

1. Unité (13) de semelle pour un article de chaussure (10), l'unité de semelle comprenant un tronçon supérieur (14) et un tronçon inférieur (15), le tronçon supérieur étant réalisé en matériau élastique ayant une dureté plus faible que le matériau à partir duquel le tronçon inférieur est formé, le tronçon inférieur n'étant pas coextensif avec le tronçon supérieur de sorte que les parties du tronçon supérieur soient visibles à travers le tronçon inférieur lorsque l'unité de semelle est vue d'en haut, où le tronçon inférieur est muni d'une ou de plusieurs lamelles (20-28) qui s'étendent à travers l'épaisseur du tronçon inférieur (15) et se terminent au niveau du tronçon supérieur (14) **caractérisée en ce que** deux lamelles (20, 21) s'étendant dans le sens de la longueur s'étendent sur toute la longueur de l'unité de semelle de l'extrémité de pointe de l'unité de semelle à l'extrémité de talon (17) de l'unité de semelle, l'espace entre les deux lamelles s'évasant de l'extérieur vers l'extrémité de la pointe (16).

2. Unité de semelle telle que revendiquée dans la revendication 1 dans laquelle les lamelles (20, 21) s'étendant dans le sens de la longueur ont une forme en serpentin de manière à épouser la forme d'un pied et le mouvement durant la marche.

3. Unité de semelle telle que revendiquée dans la revendication 1 ou la revendication 2 dans laquelle une troisième lamelle (22) s'étendant dans le sens de la longueur s'étend entre les deux lamelles (20, 21) de pleine longueur de l'extrémité de la pointe à la zone du coup de pied.

4. Unité de semelle telle que revendiquée dans l'une quelconque des revendications 1 à 3 dans laquelle une ou plusieurs parmi les lamelles (24, 25) s'étendent dans une direction globalement latérale dans la région avant de l'unité (13) de semelle pour faciliter la flexion de la région de la pointe durant la marche.

5. Unité de semelle telle que revendiquée dans la revendication 4 dans laquelle deux lamelles (24, 25) latérales de pointe s'étendent obliquement du côté latéral extérieur (18) jusqu'au côté latéral intérieur (19).

6. Unité de semelle telle que revendiquée dans la revendication 5 dans laquelle chaque lamelle (24, 25) latérale de pointe rencontre le bord extérieur de l'unité de semelle de manière plus proche de l'extrémité de la pointe que lorsqu'elle rencontre le bord intérieur de l'unité de semelle.

7. Unité de semelle telle que revendiquée dans la revendication 6 dans laquelle une troisième lamelle (26) latérale de pointe s'étend du bord extérieur de l'unité de semelle vers le talon des deux premières lamelles latérales (24, 25), la troisième lamelle se courbant vers le bord intérieur (19) de l'unité de semelle dans la région du pied de la chaussure pour revenir ensuite au bord extérieur de l'unité de semelle.

8. Unité de semelle telle que revendiquée dans l'une quelconque des revendications 1 à 7 dans laquelle une ou plusieurs parmi les lamelles (27, 28) s'étendent dans une direction globalement latérale dans la région du talon de l'unité de semelle.

9. Unité de semelle telle que revendiquée dans la revendication 8 dans laquelle les lamelles (27, 28) latérales du talon sont globalement en forme de C et s'étendent du bord extérieur (18) au bord intérieur (19) de l'unité de semelle, la courbure de la forme en C donnant sur le talon.

10. Unité de semelle telle que revendiquée dans la revendication 3 en relation avec la revendication 7 dans laquelle une lamelle ovoïde (23) de talon est prévue dans la région du talon, la lamelle ovoïde de talon croisant les deux lamelles (20, 21) de pleine longueur, ayant une jonction avec la troisième lamelle de la longueur (22) et croisant les deux lamelles (27, 28) latérales de talon et l'extrémité donnant sur le talon de la troisième lamelle latérale (26) de pointe.

11. Unité de semelle telle que revendiquée dans l'une quelconque des revendications 1 à 10 dans laquelle en coupe transversale chaque lamelle voit ses côtés opposés s'effiler vers l'intérieur vers l'extrémité supérieure de la lamelle.

12. Unité de semelle telle que revendiquée dans l'une quelconque des revendications 1 à 11 dans laquelle le matériau du tronçon supérieur (14) a une couleur différente du matériau du tronçon inférieur (15).

13. Unité de semelle telle que revendiquée dans la revendication 12 dans laquelle le matériau du tronçon supérieur (14) a une couleur contrastée par rapport au matériau du tronçon inférieur (15).

14. Unité de semelle telle que revendiquée dans l'une quelconque des revendications 1 à 13 dans laquelle au moins une partie de la surface la plus basse du tronçon inférieur (15) est munie de contours facilitant l'adhérence.

15. Unité de semelle telle que revendiquée dans l'une quelconque des revendications 1 à 14 dans laquelle la dureté Shore A du tronçon supérieur (14) est inférieure à 55.

16. Unité de semelle telle que revendiquée dans l'une quelconque des revendications 1 à 15 dans laquelle la dureté Shore A du tronçon inférieur (15) est de 55 ou plus.

17. Unité de semelle telle que revendiquée dans la revendication 16 dans laquelle la dureté Shore A du tronçon supérieur (14) est supérieure à 35, de préférence entre 40 et 50, et de préférence 45.

18. Unité de semelle telle que revendiquée dans la revendication 17 dans laquelle la dureté Shore A du tronçon inférieur (15) est comprise entre 55 et 75, de préférence entre 60 et 70 et de préférence de 65.

19. Unité de semelle telle que revendiquée dans l'une quelconque des revendications 1 à 18 dans laquelle le matériau du tronçon inférieur (15) est élastique.

20. Unité de semelle telle que revendiquée dans l'une quelconque des revendications 1 à 19 dans laquelle les matériaux des tronçons supérieur et inférieur (14, 15) sont en caoutchouc vulcanisé.

21. Article de chaussure (10) comprenant une tige (11) et une semelle (12), la semelle incorporant une unité (13) de semelle telle que revendiquée dans l'une quelconque des revendications 1 à 20.

22. Article de chaussure tel que revendiqué dans la revendication 21 dans lequel toute la surface de semelle est constituée par ladite unité (13) de semelle.

23. Article de chaussure tel que revendiqué dans la revendication 22 dans lequel une assise plantaire est prévue dans l'article de chaussure sur le dessus de l'unité de semelle.
